(19) Europäisches Patentamt
European Patent Office
Office européen des brevets

(11) **EP 2 663 587 B1**

(12) **EUROPEAN PATENT SPECIFICATION**

(45) Date of publication and mention
of the grant of the patent:
**01.03.2017 Bulletin 2017/09**

(51) Int Cl.:
**C08G 69/32** *(2006.01)* **C08L 77/10** *(2006.01)*
**D01F 6/60** *(2006.01)*

(21) Application number: **12701408.2**

(22) Date of filing: **13.01.2012**

(86) International application number:
**PCT/US2012/021220**

(87) International publication number:
**WO 2012/097236 (19.07.2012 Gazette 2012/29)**

(54) **NEUTRALIZED COPOLYMER CRUMB AND PROCESSES FOR MAKING SAME**

NEUTRALISIERTE COPOLYMER-KRUMEN UND VERFAHREN ZU IHRER HERSTELLUNG

GRANULÉ DE COPOLYMÈRE NEUTRALISÉ ET SES PROCÉDÉS DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.01.2011 US 201161432350 P**

(43) Date of publication of application:
**20.11.2013 Bulletin 2013/47**

(73) Proprietor: **E. I. du Pont de Nemours and Company
Wilmington, DE 19898 (US)**

(72) Inventors:
• **LEE, Kiu-Seung
Midlothian
Virginia 23113 (US)**
• **MALLON, Frederick, K.
Midlothian
Virginia 23112 (US)**
• **NEWTON, Christopher, William
Richmond
Virginia 23221 (US)**

(74) Representative: **Morf, Jan Stefan et al
Abitz & Partner
Patentanwälte mbB
Postfach 86 01 09
81628 München (DE)**

(56) References cited:
**WO-A1-2005/054337 US-A1- 2010 029 159**

• **SHCHETININ V M ET AL: "The pseudoeffect of the
hydrogen chloride contained in the aramid fibres
SVM, armos, and Rusar on their properties during
prolonged storage and use", FIBRE CHEMISTRY,
KLUWER ACADEMIC PUBLISHERS-PLENUM
PUBLISHERS, NE, vol. 38, no. 6, 1 November 2006
(2006-11-01), pages 450-452, XP019500648, ISSN:
1573-8493, DOI: 10.1007/S10692-006-0108-Y**

EP 2 663 587 B1

## Description

### TECHNICAL FIELD

The present application concerns neutralization of acid in polymers derived from the copolymerization of para-phenylenediamine, 5(6)-amino-2-(p-aminophenyl) benzimidazole; and terephthaloyl dichloride.

### BACKGROUND

Advances in polymer chemistry and technology over the last few decades have enabled the development of high-performance polymeric fibers. For example, liquid-crystalline polymer solutions of rigid-rod and semi-rigid-rod polymers can be formed into high strength fibers by spinning liquid-crystalline polymer solutions into dope filaments, removing solvent from the dope filaments, washing and drying the fibers; and if desired, further heat treating the dried fibers. One example of high-performance polymeric fibers is para-aramid fiber such as poly (paraphenylene terephthalamide) ("PPD-T" or "PPTA").

Fiber strength is typically correlated to one or more polymer parameters, including composition, molecular weight, intermolecular interactions, backbone, residual solvent or water, macromolecular orientation, and process history. For example, fiber strength typically increases with polymer length (*i.e.*, molecular weight), polymer orientation, and the presence of strong attractive intermolecular interactions. As high molecular weight rigid-rod polymers are useful for forming polymer solutions ("dopes") from which fibers can be spun, increasing molecular weight typically results in increased fiber strength.

Fibers derived from 5(6)-amino-2-(p-aminophenyl) benzimidazole, para-phenylenediamine and terephthaloyl dichloride are known in the art. Hydrochloric acid is produced as a by-product of the polymerization reaction. The majority of the fibers made from such copolymers have generally been spun directly from the polymerization solution without further treatment. Such copolymers are the basis for a high strength fibers manufactured in Russia, for example, under the trade names Armos® and Rusar®. See, Russian Patent Application No. 2,045,586. However, the copolymer can be isolated from the polymerization solvent and then redissolved in another solvent, typically sulfuric acid, to spin fibers. With this process, the copolymer is sometimes washed with water in an attempt to remove the HCl acid by-product from the polymerization. However, simple water washing does not remove an adequate amount of HCl from the copolymer. Once the copolymer is redissolved in sulfuric acid, this residual HCl is volatilized, forming bubbles in the copolymer spinning solution, which are believed to impact final filament quality and mechanical strength.

WO 2005/054337 A1 discloses a method for obtaining a composition comprising an aromatic polyamide containing para-phenylene terephthalamide and 2-(p-phenylene)-benzimidazole terephthalamide units by copolymerizing para-phenylenediamine (PPD), 5(6)-amino-2-(p-aminophenyl)benzimidazole (DAPBI); and terephthaloyl dichloride (TDC) in a mixture of N-methyl pyrrolidone (NMP) and calcium chloride.

Shchetinin, Tikhonov and Tokarev in the article "THE PSEUDOEFFECT OF THE HYDROGEN CHLORIDE CONTAINED IN THE ARAMID FIBERS SVM, ARMOS, AND RUSAR ON THEIR PROPERTIES DURING PROLONGED STORAGE AND USE" (Fiber Chemistry Vol. 38, No.6, 2006) provide data regarding the stability of SVM, Armos and Russar fibres under prolonged storage conditions.

US 2010/0029159 A1 relates to heterocycle-containing aromatic polyamide fibers comprising a heterocylcle-containing aromatic polyamide, characterized in that the fibers have a tensile strength of 20 cN/dtex or more, an initial modulus of 500 cN/dtex or more and a sulfuric acid soluble amount of 45% or less.

Known processes for making copolymer fibers directly from polymerization solution, while producing a good product for use in ballistic and other aramid end-uses, are very expensive with very poor investment economics. As such, there is a need in the art for manufacturing process wherein the copolymer is solutioned in a common solvent, such as sulfuric acid which has both improved economics compared to processes known in the art and provides copolymer fibers having superior physical properties.

### SUMMARY

The instant invention concerns copolymer crumb derived from the copolymerization of para-phenylenediamine, 5(6)-amino-2-(p-aminophenyl)benzimidazole; and terephthaloyl dichloride, the copolymer crumb having an inherent viscosity of at least 3 dl/g and having less than 0.4 mol/Kg of titrate-able acid. In some embodiments, the copolymer crumb has less than 0.1 mol/Kg of titrate-able acid or less than 0.05 mol/Kg of titrate-able acid. The copolymer has a ratio of moles of 5(6)-amino-2-(p-aminophenyl) benzimidazole to the moles of para-phenylenediamine of 30/70 to 85/15. In some preferred embodiments, the copolymer has a mole ratio is 45/55 to 85/15.

Preferred copolymers have an inherent viscosity of at least 4 dl/g. The invention also concerns filaments and yarn formed from such polymer crumb and processes for forming the filaments and yarn.

In some aspects, the invention also concerns processes comprising the steps of: a) providing a copolymer crumb derived from the copolymerization of para-phenylenediamine, 5(6)-amino-2-(p-aminophenyl)benzimidazole; and terephthaloyl dichloride, the copolymer crumb having an acid byproduct or impurity; b) contacting the copolymer crumb with a base to form a salt with the acid byproduct or impurity; and c) removing at least a portion of the salt to form neutralized copolymer crumb, wherein the base is contacted with the copolymer crumb for a period of time sufficient to provide a copolymer crumb having less than 0.4 mol/Kg of titrateable acid; and wherein the neutralized copolymer crumb has an inherent viscosity of at least 3 dl/g. In some embodiments, prior to step b), the copolymer crumb is pre-washed with aqueous media. In certain embodiments, the aqueous media is water.

Certain processes further comprise the additional step d) forming a spinnable solution of the neutralized copolymer particles in an acid solvent. Some acid solvents comprise sulfuric acid. In some embodiments, the acid solvent is at least 96%, 98%, or 100% sulfuric acid.

Some processes further comprise the additional e) spinning a filament from the solution.

Some copolymers of the present invention have an inherent viscosity of at least about 5 dl/g at 25°C.

In other aspects, the invention also concerns processes for forming a yarn comprising the steps of dissolving a copolymer derived from the copolymerization of para-phenylenediamine, 5(6)-amino-2-(p-aminophenyl)benzimidazole; and terephthaloyl dichloride in sulfuric acid to form a spinning solution, wherein the copolymer is neutralized prior to forming said spinning solution; said copolymer having an inherent viscosity of at least 3 dl/g and having less than 0.4 mol/Kg of titrate-able acid.

Additionally, the invention concerns yarn made from filaments made by a process described herein.

## BRIEF DESCRIPTION OF THE DRAWINGS

The foregoing summary, as well as the following detailed description, is further understood when read in conjunction with the appended drawings. For the purpose of illustrating the invention, there is shown in the drawings exemplary embodiments of the invention; however, the invention is not limited to the specific methods, compositions, and devices disclosed. In the drawings:

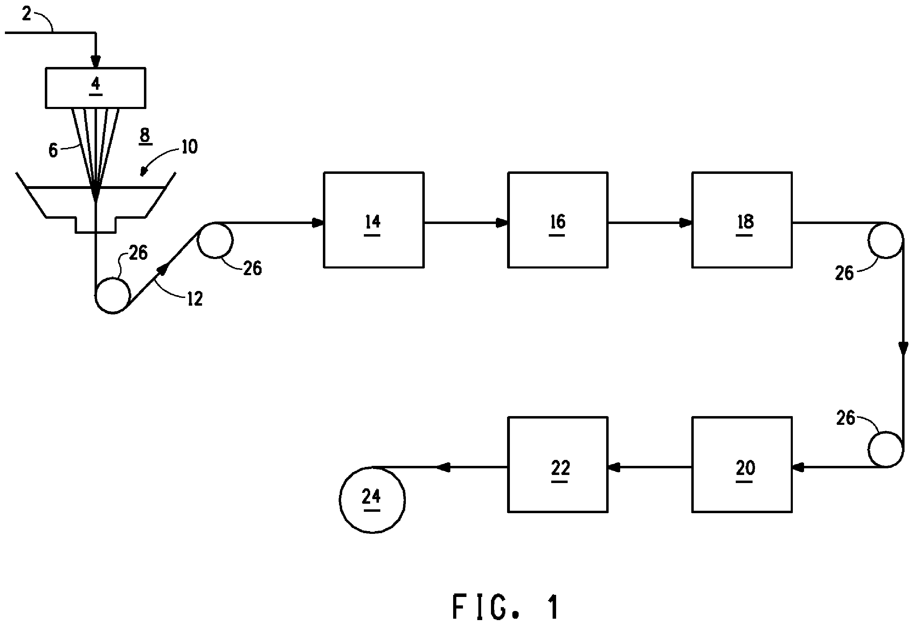

Figure 1 is a schematic diagram of a fiber production process.

## DETAILED DESCRIPTION OF ILLUSTRATIVE EMBODIMENTS

The present invention may be understood more readily by reference to the following detailed description taken in connection with the accompanying figures and examples, which form a part of this disclosure. It is to be understood that this invention is not limited to the specific devices, methods, conditions or parameters described and/or shown herein, and that the terminology used herein is for the purpose of describing particular embodiments by way of example only and is not intended to be limiting of the claimed invention.

As used in the specification including the appended claims, the singular forms "a," "an," and "the" include the plural, and reference to a particular numerical value includes at least that particular value, unless the context clearly dictates otherwise. When a range of values is expressed, another embodiment includes from the one particular value and/or to the other particular value. Similarly, when values are expressed as approximations, by use of the antecedent "about," it will be understood that the particular value forms another embodiment. All ranges are inclusive and combinable. When any variable occurs more than one time in any constituent or in any formula, its definition in each occurrence is independent of its definition at every other occurrence. Combinations of substituents and/or variables are permissible only if such combinations result in stable compounds.

The present invention is related to a process which performs the polymerization of 5(6)-amino-2-(p-aminophenyl)benzimidazole, para-phenylenediamine and terephthaloyl dichloride at high solids (7 percent or greater) in NMP/CaCl$_2$ or DMAC/CaCl$_2$, isolates the copolymer crumb, dissolves the isolated copolymer crumb in concentrated sulfuric acid to form a liquid crystalline solution, and spins the solution into fibers. By "solids" it is meant the ratio of the mass of copolymer to the total mass of the solution, that is, the mass of the copolymer plus solvent.

The copolymerization reaction of 5(6)-amino-2-(p-aminophenyl) benzimidazole, para-phenylenediamine and terephthaloyl dichloride can be accomplished by means known in the art. See, for example, PCT Patent Application No. 2005/054337 and U.S. Patent Application No. 2010/0029159. Typically, one or more acid chloride(s) and one or more aromatic diamine(s) are reacted in an amide polar solvent such as N,N-dimethylformamide, N,N-dimethylacetamide, N-methyl-2-pyrrolidone, dimethylimidazolidinone and the like. N-methyl-2-pyrrolidone is preferred in some embodiments.

In some embodiments, before or during the polymerization, a solubility agent of an inorganic salt such as lithium chloride or calcium chloride, or the like is added in a suitable amount to enhance the solubility of the resulting copolyamide in the amide polar solvent. Typically, 3 to 10% by weight relative to the amide polar solvent is added. After the desired degree of polymerization has been attained, the copolymer is present in the form of an un-neutralized crumb. By "crumb" it is meant the copolymer is in the form of a friable material or gel that easily separates into identifiable separate masses when sheared or cut (e.g. chopped in a blender). The un-neutralized crumb includes the copolymer, the polymerization solvent, the solubility agent and the byproduct water and acid from the condensation reaction, typically hydrochloric acid (HCl).

After completing the polymerization reaction, the un-neutralized crumb is then contacted with a base, which can be a basic inorganic compound, such as sodium hydroxide, potassium hydroxide, calcium hydroxide, calcium oxide, ammonium hydroxide, and the like, generally in aqueous form, is added to perform a neutralization reaction of the HCl by-product. If desired, the basic compound can be an organic base such as diethyl amine or tributyl amine or other amines. Generally the un-neutralized copolymer crumb is contacted with the aqueous base by washing, which converts the acidic byproduct to a salt (generally a sodium chloride salt if sodium hydroxide is the base and HCl is the acidic byproduct) and also removes some of the polymerization solvent. If desired, the un-neutralized copolymer crumb can be optionally first washed one or more times with water prior to contacting with the basic inorganic compound to remove excess polymerization solvent. Once the acidic byproduct in the copolymer crumb is neutralized, additional water washes can be employed to remove salt and polymerization solvent and lower the pH of the crumb, if needed.

This invention also relates to a process for forming an aramid yarn comprising dissolving a copolymer crumb derived from the copolymerization of para-phenylenediamine, 5(6)-amino-2-(p-aminophenyl) benzimidazole; and terephthaloyl dichloride in sulfuric acid to form a spinning solution, wherein the copolymer crumb is neutralized prior to forming said spinning solution; said copolymer having an inherent viscosity of at least 3 dl/g and having less than 0.4 mol/Kg of titrate-able acid. In one preferred embodiment, the copolymer crumb is neutralized by washing with an aqueous base. Terephthaloyl dichloride is also known as terephthaloyl chloride.

The copolymer is preferably spun into fiber using solution spinning. Generally this involves solutioning the neutralized copolymer crumb in a suitable solvent to form a spin solution (also known as spin dope), the preferred solvent being sulfuric acid. The inventors have found that the use of copolymer crumb that has been neutralized as described herein dramatically reduces the formation of bubbles in the spin dope when such neutralized crumb is combined with sulfuric acid in the solutioning process. If the copolymer crumb is not neutralized, the hydrochloric acid by-product in the copolymer will volatize on contact with the sulfuric acid and form bubbles in the spin dope. Since the solution viscosity of the spin dope is relatively high, any such bubbles that are formed during solutioning tend to stay in the spin dope and are spun into the filaments. The neutralized copolymer crumb, when solutioned in sulfuric acid, provides an essentially bubble-free and therefore more uniform spinning solution which is believed to provide more uniformly superior copolymer filaments and fibers.

The spin dope containing the copolymer described herein can be spun into dope filaments using any number of processes; however, wet spinning and "air-gap" spinning are the best known. The general arrangement of the spinnerets and baths for these spinning processes is well known in the art, with the figures in U.S. Patent Nos. 3,227,793; 3,414,645; 3,767,756; and 5,667,743 being illustrative of such spinning processes for high strength polymers. In "air-gap" spinning the spinneret typically extrudes the fiber first into a gas, such as air and is a preferred method for forming filaments

It is believed that in addition to producing the spinning dope with neutralized copolymer crumb, for the best fiber properties, the manufacturing process of spinning fibers from an acid solvent should additionally include not only steps that extract acid solvent from the dope filaments but also further remove and/or neutralize any remaining acid associated with or bound to the copolymer in the fiber. It is believed that failure to do this can result in more potential degradation of the copolymer in the fiber and subsequent decrease in fiber mechanical properties over time.

One process for making copolymer filaments is shown in **Figure 1.** The dope solution **2,** comprising copolymer and sulfuric acid, typically contains a high enough concentration of polymer for the polymer to form an acceptable filament **6** after extrusion and coagulation. When the polymer is lyotropic liquid-crystalline, the concentration of polymer in the dope **2** is preferably high enough to provide a liquid-crystalline dope. The concentration of the polymer is preferably at least 7 weight percent, more preferably at least 10 weight percent and most preferably at least 14 weight percent.

The polymer dope solution **2** may contain additives such as anti-oxidants, lubricants, ultra-violet screening agents, colorants and the like which are commonly incorporated.

The polymer dope solution **2** is typically extruded or spun through a die or spinneret **4** to prepare or form the dope filaments **6.** The spinneret **4** preferably contains a plurality of holes. The number of holes in the spinneret and their arrangement is not critical, but it is desirable to maximize the number of holes for economic reasons. The spinneret **4** can contain as many as 100 or 1000, or more, and they may be arranged in circles, grids, or in any other desired arrangement. The spinneret **4** may be constructed out of any materials that will not be severely degraded by the dope solution **2.**

The spinning process of **Figure 1** employs "air-gap spinning (also sometimes known as "dry-jet" wet spinning). Dope solution **2** exits the spinneret **4** and enters a gap **8** (typically called an "air gap" although it need not contain air) between the spinneret **4** and a coagulation bath **10** for a very short duration of time. The gap **8** may contain any fluid that does not induce coagulation or react adversely with the dope, such as air, nitrogen, argon, helium, or carbon dioxide. The dope filament **6** proceeds across the air gap **8,** and is immediately introduced into a liquid coagulation bath. Alternately, the fiber may be "wet-spun" (not shown). In wet spinning, the spinneret typically extrudes the fiber directly into the liquid of a coagulation bath and normally the spinneret is immersed or positioned beneath the surface of the coagulation bath. Either spinning process may be used to provide fibers for use in the processes of the invention. In some embodiments of the present invention, air-gap spinning is preferred.

The filament **6** is "coagulated" in the coagulation bath **10** containing water or a mixture of water and sulfuric acid. If multiple filaments are extruded simultaneously, they may be combined into a multifilament yarn before, during or after the coagulation step. The term "coagulation" as used herein does not necessarily imply that the dope filament **6** is a flowing liquid and changes into a solid phase. The dope filament **6** can be at a temperature low enough so that it is essentially non-flowing before entering the coagulation bath **10**. However, the coagulation bath **10** does ensure or complete the coagulation of the filament, *i.e.,* the conversion of the polymer from a dope solution **2** to a substantially solid polymer filament **12**. The amount of solvent, *i.e.*, sulfuric acid, removed during the coagulation step will depend on the residence time of the filament **6** in the coagulation bath, the temperature of the bath **10,** and the concentration of solvent therein. For example, using an 18 weight percent copolymer/sulfuric acid solution at a temperature of about 23°C, a residence time of about one second will remove about 30 percent of the solvent present in the filament **6.**

After the coagulation bath, the fiber may be contacted with one or more washing baths or cabinets **14**. Washes may be accomplished by immersing the fiber into a bath or by spraying the fiber with the aqueous solution. Washing cabinets typically comprise an enclosed cabinet containing one or more rolls which the filament travels around a number of times, and across, prior to exiting the cabinet. As the filament or yarn **12** travels around the roll, it is sprayed with a washing fluid. The washing fluid is continuously collected in the bottom of the cabinet and drained therefrom.

The temperature of the washing fluid(s) is preferably greater than 30°C. The washing fluid may also be applied in vapor form (steam), but is more conveniently used in liquid form. Preferably, a number of washing baths or cabinets are used. The residence time of the yarn **12** in any one washing bath or cabinet 14 will depend on the desired concentration of residual sulfur in the yarn **12**. In a continuous process, the duration of the entire washing process in the preferred multiple washing bath(s) and/or cabinet(s) is preferably no greater than about 10 minutes, more preferably greater than about 5 seconds. In some embodiments the duration of the entire washing process is 20 seconds or more; in some embodiments the entire washing is accomplished in 400 seconds or less. In a batch process, the duration of the entire washing process can be on the order of hours, as much as 12 to 24 hours or more.

Neutralization of the sulfuric acid in the yarn can occur in bath or cabinet **16..** In some embodiments, the neutralization bath or cabinet may follow one or more washing baths or cabinets. Washes may be accomplished by immersing the fiber into a bath or by spraying the fiber with the aqueous solution. Neutralization may occur in one bath or cabinet or in multiple baths or cabinets. In some embodiments, preferred bases for the neutralization of sulfuric acid impurity include NaOH; KOH; $Na_2CO_3$; $NH_4OH$; $Ca(OH)_2$; $NaHCO_3$; $K_2CO_3$; $KHCO_3$; or trialkylamines, preferably tributylamine; other amines; or mixtures thereof. In one embodiment, the base is water soluble. In some preferred examples the neutralization solution is an aqueous solution containing 0.01 to 1.25 mols of base per liter, preferably 0.01 to 0.5 mols of base per liter. The amount of cation is also dependent on the time and temperature of exposure to the base and the washing method. In some preferred embodiments, the base is NaOH or $Ca(OH)_2$.

After treating the fiber with base, the process optionally may include the step of contacting the filament with a washing solution containing water or an acid to remove all or substantially all excess base. This washing solution can be applied in one or more washing baths or cabinets **18.**

After washing and neutralization, the fiber or yarn **12** may be dried in a dryer **20** to remove water and other liquids. One or more dryers may be used. In certain embodiments, the dryer may be an oven which uses heated air to dry the fibers. In other embodiments, heated rolls may be used to heat the fibers. The fiber is heated in the dryer to a temperature of at least

20°C but less than 100°C until the moisture content of the fiber is 20 weight percent of the fiber or less. In some embodiments the fiber is heated to 85°C or less. In some embodiments the fiber is heated under those conditions until the moisture content of the fiber is 14 weight percent of the fiber or less. The inventors have discovered that low temperature drying is a preferred route to improved fiber strength. Specifically, the inventors have found that the best fiber strength properties are achieved when the first drying step (i.e. heated roll, heated atmosphere as in an oven, etc.) experienced by the never-dried yarn is conducted at gentle temperatures not normally used in continuous processes used to dry high strength fibers on commercial scale. It is believed that the copolymer fiber has more affinity to water than PPD-T homopolymer; this affinity slows the diffusion rate of water out of the polymer during drying and consequently if the never-dried yarn is directly exposed to typical high drying temperatures, generally used to created a large thermal driving force and reduce drying time, irreparable damage to the fiber occurs resulting in lower fiber strength. In some embodiments, the fiber is heated at least to 30°C; in some embodiments the fiber is heated at least to 40°C.

The dryer residence time is less than ten minutes and is preferably less than 180 seconds.. The dryer can be provided with a nitrogen or other non-reactive atmosphere. The drying step typically is performed at atmospheric pressure. If desired, however, the step may be performed under reduced pressure. In one embodiment, the yarn or filaments are dried under tension of at least 0.09 cN/dtex (0.1 gpd), preferably a tension of 1.77 cN/dtex (2gpd) or greater.

Following the drying step, the fiber is preferably further heated to a temperature of at least 350°C in, for instance, a heat setting device **22**. One or more devices may be utilized. For example, such processing may be done in a nitrogen purged tube furnace **22** for increasing tenacity and/or relieving the mechanical strain of the molecules in the filaments. In some embodiments, the fiber or yarn is heated to a temperature of at least 400°C. In one embodiment, the filaments are further heated under tension of 0,9cN/dtex (1gpd) or less, using only enough tension advance the yarn through the heating device.

In some embodiments, the heating is a multistep process. For example, in a first step the fiber or yarn may heated at a temperature of 200 to 360°C at a tension of at least 0.2 cN/dtex, followed by a second heating step where the fiber or yarn is heated at a temperature of 370 to 500 °C at a tension of less than 1 cN/dtex.

Finally, the filament or yarn **12** is wound up into a package on a windup device **24**. Rolls, pins, guides, and/or motorized devices **26** are suitably positioned to transport the filament or yarn through the process. Such devices are well known in the art and any suitable device may be utilized.

Molecular weights of polymers are typically monitored by, and correlated to, one or more dilute solution viscosity measurements. Accordingly, dilute solution measurements of the relative viscosity ("$V_{rel}$" or "$\eta_{rel}$" or "$n_{rel}$") and inherent viscosity ("$V_{inh}$" or "$\eta_{inh}$" or "$n_{inh}$") are typically used for monitoring polymer molecular weight. The relative and inherent viscosities of dilute polymer solutions are related according to the expression

$$V_{inh} = ln\ (V_{rel})\ /\ C,$$

where $ln$ is the natural logarithm function and C is the concentration of the polymer solution. $V_{rel}$ is a unitless ratio, thus $V_{inh}$ is expressed in units of inverse concentration, typically as deciliters per gram ("dl/g").

The invention is further directed, in part, to a yarn comprising a plurality of the filaments of the present invention, fabrics that include filaments or yarns of the present invention, and articles that include fabrics of the present invention. For purposes herein, "fabric" means any woven, knitted, or non-woven structure. By "woven" is meant any fabric weave, such as, plain weave, crowfoot weave, basket weave, satin weave, twill weave, and the like. By "knitted" is meant a structure produced by interlooping or intermeshing one or more ends, fibers or multifilament yarns. By "non-woven" is meant a network of fibers, including unidirectional fibers (if contained within a matrix resin), felt, and the like.

"Fiber" means a relatively flexible, unit of matter having a high ratio of length to width across its cross-sectional area perpendicular to its length. Herein, the term "fiber" is used interchangeably with the term "filament". The cross section of the filaments described herein can be any shape, but are typically circular or bean shaped. Fiber spun onto a bobbin in a package is referred to as continuous fiber. Fiber can be cut into short lengths called staple fiber. Fiber can be cut into even smaller lengths called floc. The term "yarn" as used herein includes bundles of filaments, also known as multifilament yarns; or tows comprising a plurality of fibers; or spun staple yarns. Yarn can be intertwined and/or twisted.

**TEST METHODS**

Yarn tenacity is determined according to ASTM D 885 and is the maximum or breaking stress of the yarn as expressed as either force per unit cross-sectional area, as in giga-Pascals (GPa), or in force per unit mass per length, as in grams per denier or grams per dtex.

Inherent viscosity is determined using a solution in which a polymer is dissolved in a concentrated sulfuric acid with a concentration of 96 wt % at a polymer concentration (C) of 0.5 g/dl and at a temperature of 25 °C. Inherent viscosity is then calculated as ln ($t_{poly}/t_{solv}$)/C where $t_{poly}$ is the drop time for the polymer solution and $t_{solv}$ is the drop time of the pure solvent.

Percent sulfur is determined according to ASTM D4239 Method B.

Moisture content of the fiber was obtained by first weighing the fiber sample, placing the sample in an oven at 300 °C for 20 minutes, then immediately re-weighing the sample. Moisture content is then calculated by subtracting the dried sample weight from the initial sample weight and dividing by the dried sample weight times 100.

The amount of titrate-able acid is determined by slurrying a 2 gram sample of the copolymer in 90 g of water and 10.00 g of 0.5 M sodium hydroxide. After boiling slurry for one hour, the liquid is titrated to neutrality with 0.5 M HCl. In doing so, the net base (moles of NaOH - moles of HCl) necessary to neutralize the polymer is found.

Many of the following examples are given to illustrate various embodiments of the invention and should not be interpreted as limiting it in any way. All parts and percentages are by weight unless otherwise indicated.

**EXAMPLES**

Both examples were made from the same polymer. 1.7289 g of paraphenylene diamine, 8.0043 g of 5(6)-amino-2-(p-aminophenyl) benzimidazole, and 10.5257 g of terephthaloyl chloride were reacted in n-methyl pyrolidone with 2.8% calcium chloride ($CaCl_2$.). Time of reaction was 40 minutes. The recovered copolymer crumb was chopped in a Waring Blender for 90 seconds with 400 ml of water. The pH was then measured for this crumb and is reported in the Table as Wash 1. The chopped copolymer crumb was filtered and separated into two equal parts designated the first part and second part in the examples.

## Comparative Example A

The first part of the copolymer crumb was then washed with distilled water an additional nine times, making ten total washings with water. Each wash consisted of adding distilled water to the prior-washed filter cake until a total mass of 260 g was reached, further chopping in a Waring Blender for three minutes, measuring the pH of the slurry, and then filtering. The pH after each wash (2-10) is shown in the Table. As can be seen from the washing data in the Table, polymer having a pH in the 5 - 9 range was not obtained; to obtain such a pH would obviously require a very large (and uneconomic) number of washes.

After the final wash, the recovered copolymer was dried in vacuum with a nitrogen purge at 120 °C. The measured inherent viscosity of a sample of this copolymer was 6.5 dl/g.

A sample of the dried copolymer was then analyzed for residual acid by slurrying 2 g of the copolymer in 90 g of water and 10.00 g of 0.5 M sodium hydroxide. After boiling the slurry for one hour, the liquid was titrated to neutrality with 0.5 M HCl. In doing so, the net base (moles of NaOH - moles of HCl) necessary to neutralize the polymer was found to be 0.44 mol / kg. This makes the titratable acid 0.44 mol/kg. The overall ion concentration in this example is roughly 0.88 mol /kg since there are 0.44 moles each of H and Cl with few other ions.

A sample of the dried copolymer was then dissolved in sulfuric acid at 19.6% solids to form a dope solution. The dope solution was also placed in a vacuum oven, and the characteristic smell of HCl was detected. The dope solution had a large amount of bubbles which were difficult to extract. The solution could be used to make fibers; however, these fibers would have numerous voids and be of poor quality, resulting in yarns of poor strength.

## Example 1

The second part of the copolymer crumb had a different series of washings. Wash 2 consisted of washing the previously single-washed copolymer crumb with 4.2 g of 50% caustic and enough water to total 260g. The blender was operated for three minutes after which the pH was measured and the material was filtered. The copolymer was then washed with only distilled water for eight additional times. Each wash consisted of adding distilled water to the previously washed filter cake until a total mass of 260 g was reached, chopping in a Waring Blender for three minutes, measuring the pH of the slurry, and filtering. The pH after each wash (2-10) is shown in the Table. As can be seen from the washing data in the Table, polymer having a pH in the 5 - 9 range was easily obtained with only a few number of washes.

After the final wash, the recovered copolymer was dried in vacuum with a nitrogen purge at 120 °C. The measured inherent viscosity of a sample of this copolymer was 6.8 dl/g. It is believed this number is higher than in the comparison example due to the lack of HCl when the polymer is weighed to measure the inherent viscosity.

A sample of the dried copolymer was then analyzed for residual acid by slurrying 2 g of the copolymer in 90 g of water and 10.00 g of 0.5 M sodium hydroxide. After boiling slurry for one hour, the liquid was titrated to neutrality with 0.5 M HCl. In doing so, the net base (moles of NaOH - moles of HCl) necessary to neutralize the polymer was found to be 0.031 mol / kg. This makes the titratable acid 0.031 mol/kg. Due to the small losses of basic solution that occur during boiling, this result is not significantly different from zero. The overall ion concentration in this example is less than 0.10 mol /kg since there are 0.03 moles each of H and Cl.

A sample of the dried copolymer was then dissolved in sulfuric acid at 19.6% solids to form a dope solution. The dope solution had few bubbles. Solution was also placed in a vacuum oven. No smell of HCl was detected. The solution can be used to make uniform fibers having few voids. These fibers can be collected to make a yarn having good strength.

| Table | | |
|---|---|---|
| Wash # | Comparison Example A (pH) | Example 1 (pH) |
| 1 | 1.5 | 1.5 |
| 2 | 1.7 | 12.2 |
| 3 | 2.5 | 11.7 |
| 4 | 2.7 | 10.4 |

(continued)

| Table | | |
| --- | --- | --- |
| Wash # | Comparison Example A (pH) | Example 1 (pH) |
| 5 | 3.0 | 9.0 |
| 6 | 3.0 | 8.6 |
| 7 | 2.9 | 8.5 |
| 8 | 3.0 | 8.1 |
| 9 | 3.3 | 8.0 |
| 10 | 3.3 | 7.5 |

**Claims**

1. A copolymer crumb derived from the copolymerization of para-phenylenediamine, 5(6)-amino-2-(p-aminophenyl) benzimidazole, and terephthaloyl dichloride having an inherent viscosity of at least 3 dl/g and having less than 0.4 mol/Kg of titrate-able acid.

2. The copolymer of claim 1 having less than 0.1 mol/Kg of titrate-able acid, preferably having less than 0.05 mol/Kg of titrate-able acid.

3. The copolymer of any one of claims 1-2, the ratio of moles of 5(6)-amino-2-(p-aminophenyl) benzimidazole to the moles of para-phenylenediamine is 30/70 to 85/15, preferably
wherein the ratio is 45/55 to 85/15.

4. The copolymer of any one of claims 1-3, wherein said copolymer has an inherent viscosity of at least 4 dl/g at 25 °C, preferably
wherein said copolymer has an inherent viscosity of at least 5 dl/g at 25 °C.

5. A process comprising the steps of:

   a) providing a copolymer crumb derived from the copolymerization of para-phenylenediamine, 5(6)-amino-2-(p-aminophenyl)benzimidazole, and terephthaloyl dichloride, the copolymer crumb comprising an acid byproduct or impurity;
   b) contacting the copolymer crumb with a base to form a salt with the acid; and
   c) removing at least a portion of the salt to form neutralized copolymer particles,

   wherein the base is contacted with the copolymer crumb for a period of time sufficient to provide a polymer having less than 0.4 mol/Kg of titrate-able acid; and
   wherein the neutralized copolymer particles have an inherent viscosity of at least 3 dl/g.

6. The process of claim 5 wherein prior to step b) the copolymer crumb is pre-washed with aqueous media, and optionally wherein the aqueous media is water.

7. The process of any one of claims 5 - 6 further comprising:

   d) forming a spinnable solution of the neutralized copolymer particles in an acid solvent.

8. The process of claim 7, wherein the acid solvent is sulfuric acid, and optionally
wherein said sulfuric acid is at least 96%, preferably
wherein said sulfuric acid is at least 98%, more preferably
wherein said sulfuric acid is at least 100%.

9. The process of any one of claims 5 - 8 further comprising

e) spinning a filament from the solution, and/or

wherein said copolymer has an inherent viscosity of at least about 5 dl/g at 25°C.

10. A process for forming an aramid yarn comprising dissolving a copolymer derived from the copolymerization of para-phenylenediamine, 5(6)-amino-2-(p-aminophenyl) benzimidazole; and terephthaloyl dichloride in sulfuric acid to form a spinning solution, wherein the copolymer is neutralized prior to forming said spinning solution; said copolymer having an inherent viscosity of at least 3 dl/g and having less than 0.4 mol/Kg of titrate-able acid.

11. The process of claim 10, wherein the ratio of moles of 5(6)-amino-2-(p-aminophenyl) benzimidazole to the moles of para-phenylenediamine is 30/70 to 85/15, preferably
wherein the ratio is 45/55 to 85/15.

12. The process of claims 10-11, wherein said sulfuric acid is at least 96%, preferably
wherein said sulfuric acid is at least 98%, more preferably
wherein said sulfuric acid is at least 100%.

13. The process of any one of claims 10 - 12, further comprising spinning said spinning solution through a spinneret to form one or more filaments, and/or
wherein said copolymer has an inherent viscosity of at least about 5 dl/g at 25°C.

14. The process of claim 13, further comprising combining a plurality of filaments to form a yarn.

15. A yarn made by the process of any one of claims 10 - 14.


**Patentansprüche**

1. Copolymerkrümel, der aus der Copolymerisation von Para-Phenylendiamin, 5(6)-Amino-2-(p-aminophenyl)benzimidazol und Terephthaloyldichlorid abgeleitet ist, das eine inhärente Viskosität von mindestens 3 dl/g und weniger als 0,4 Mol/kg titrierbare Säure aufweist.

2. Copolymer nach Anspruch 1, das weniger als 0,1 Mol/kg titrierbare Säure, bevorzugt weniger als 0,05 Mol/kg titrierbare Säure aufweist.

3. Copolymer nach einem der Ansprüche 1 - 2, wobei das Verhältnis von Molen von 5(6)-Amino-2-(p-aminophenyl)benzimidazol zu den Molen von Para-Phenylendiamin 30/70 bis 85/15 beträgt,
wobei bevorzugt das Verhältnis 45/55 bis 85/15 beträgt.

4. Copolymer nach einem der Ansprüche 1 - 3, wobei das Copolymer eine inhärente Viskosität von mindestens 4 dl/g bei 25 °C aufweist,
wobei bevorzugt das Copolymer eine inhärente Viskosität von mindestens 5 dl/g bei 25 °C aufweist.

5. Verfahren umfassend die Schritte des:

a) Bereitstellens eines Copolymerkrümels, der aus der Copolymerisation von Para-Phenylendiamin, 5(6)-Amino-2-(p-aminophenyl)benzimidazol und Terephthaloyldichlorid abgeleitet ist, wobei der Copolymerkrümel ein saures Nebenprodukt oder eine Verunreinigung umfasst;
b) Kontaktierens des Copolymerkrümels mit einer Base, um ein Salz mit der Säure zu bilden; und
c) Entfernens mindestens eines Teils des Salzes, um neutralisierte Copolymerteilchen zu bilden,

wobei die Base mit dem Copolymerkrümel für eine Zeitspanne in Kontakt gebracht wird, die ausreicht, um ein Polymer bereitzustellen, das weniger als 0,4 Mol/kg titrierbare Säure aufweist; und
wobei die neutralisierten Copolymerteilchen eine inhärente Viskosität von mindestens 3 dl/g aufweisen.

6. Verfahren nach Anspruch 5, wobei vor Schritt b) der Copolymerkrümel mit wässrigem Medium vorgewaschen wird und
wobei wahlweise das wässrige Medium Wasser ist.

**7.** Verfahren nach einem der Ansprüche 5 - 6, ferner Folgendes umfassend:

d) das Bilden einer spinnbaren Lösung der neutralisierten Copolymerteilchen in einem sauren Lösungsmittel.

**8.** Verfahren nach Anspruch 7, wobei das saure Lösungsmittel Schwefelsäure ist, und wahlweise
wobei bevorzugt die Schwefelsäure mindestens 96 %-ig ist,
wobei bevorzugt die Schwefelsäure mindestens 98 %-ig ist,
wobei bevorzugt die Schwefelsäure mindestens 100 %-ig ist.

**9.** Verfahren nach einem der Ansprüche 5 - 8, ferner Folgendes umfassend:

e) das Spinnen eines Filaments aus der Lösung und/oder

wobei das Copolymer eine inhärente Viskosität von mindestens etwa 5 dl/g bei 25 °C aufweist.

**10.** Verfahren zum Bilden eines Aramidgarns, umfassend das Lösen eines Copolymers, das aus der Copolymerisation von Para-Phenylendiamin, 5(6)-Amino-2-(p-aminophenyl)benzimidazol und Terephthaloyldichlorid in Schwefelsäure abgeleitet ist, um eine Spinnlösung zu bilden, wobei das Copolymer vor dem Bilden der Spinnlösung neutralisiert wird; wobei das Copolymer eine inhärente Viskosität von mindestens 3 dl/g und weniger als 0,4 Mol/kg titrierbare Säure aufweist

**11.** Verfahren nach Anspruch 10, wobei das Verhältnis von Molen von 5(6)-Amino-2-(p-aminophenyl)benzimidazol zu den Molen von Para-Phenylendiamin 30/70 bis 85/15 beträgt,
wobei bevorzugt das Verhältnis 45/55 bis 85/15 beträgt.

**12.** Verfahren nach den Ansprüchen 10 - 11, wobei die Schwefelsäure mindestens 96 %-ig ist,
wobei bevorzugt die Schwefelsäure mindestens 98 %-ig ist,
wobei mehr bevorzugt die Schwefelsäure mindestens 100 %-ig ist.

**13.** Verfahren nach einem der Ansprüche 10 - 12, ferner das Spinnen der Spinnlösung durch eine Spinndüse umfassend, um ein oder mehrere Filamente zu bilden, und/oder
wobei das Copolymer eine inhärente Viskosität von mindestens etwa 5 dl/g bei 25 °C aufweist.

**14.** Verfahren nach Anspruch 13, ferner das Kombinieren einer Mehrzahl von Filamenten umfassend, um ein Garn zu bilden.

**15.** Garn, das durch das Verfahren nach einem der Ansprüche 10 - 14 hergestellt wird.

**Revendications**

**1.** Granulé de copolymère dérivé de la copolymérisation de *para*-phénylènediamine, de 5(6)-amino-2-(*p*-aminophényl)benzimidazole, et de dichlorure de téréphtaloyle présentant une viscosité inhérente d'au moins 3 dl/g et présentant moins de 0,4 mole/kg d'acide pouvant être titré.

**2.** Copolymère selon la revendication 1 présentant moins de 0,1 mole/kg d'acide pouvant être titré, préférablement présentant moins de 0,05 mole/kg d'acide pouvant être titré.

**3.** Copolymère selon l'une quelconque des revendications 1 à 2, le rapport des moles du 5(6)-amino-2-(*p*-aminophényl)benzimidazole aux moles de la *para*-phénylènediamine est de 30/70 à 85/15, préférablement où le rapport est de 45/55 à 85/15.

**4.** Copolymère selon l'une quelconque des revendications 1 à 3, dans lequel ledit copolymère présente une viscosité inhérente d'au moins 4 dl/g à 25°C, préférablement dans lequel ledit copolymère présente une viscosité inhérente d'au moins 5 dl/g à 25°C.

**5.** Procédé comprenant les étapes de:

a) préparation d'un granulé de copolymère dérivé de la copolymérisation de *para*-phénylènediamine, de 5(6)-amino-2-(*p*-aminophényl)benzimidazole, et de dichlorure de téréphtaloyle, le granulé de copolymère comprenant un sous-produit acide ou une impureté;

b) mise en contact du granulé de copolymère avec une base pour former un sel avec l'acide; et

c) élimination d'au moins une partie du sel pour former des particules de copolymère neutralisées,

où la base est mise en contact avec le granulé de copolymère sur une durée suffisante pour fournir un polymère présentant moins de 0,4 mole/kg d'acide pouvant être titré; et

où les particules de copolymère neutralisées présentent une viscosité inhérente d'au moins 3 dl/g.

6. Procédé selon la revendication 5 dans lequel avant l'étape b) le granulé de copolymère est prélavé avec un milieu aqueux, et optionnellement

dans lequel le milieu aqueux est l'eau.

7. Procédé selon l'une quelconque des revendications 5 à 6 comprenant en outre:

d) la formation d'une solution pouvant être filée des particules de copolymère neutralisé dans un solvant acide.

8. Procédé selon la revendication 7, dans lequel le solvant acide est l'acide sulfurique, et optionnellement

dans lequel ledit acide sulfurique est au moins de 96 %, préférablement

dans lequel ledit acide sulfurique est au moins de 98 %, plus préférablement

dans lequel ledit acide sulfurique est au moins de 100 %.

9. Procédé selon l'une quelconque des revendications 5 à 8 comprenant en outre

e) le filage d'un filament à partir de la solution, et/ou

dans lequel ledit copolymère présente une viscosité inhérente d'au moins environ 5 dl/g à 25°C.

10. Procédé de formation d'un fil d'aramide comprenant la dissolution d'un copolymère dérivé de la copolymérisation de *para*-phénylènediamine, de 5(6)-amino-2-(*p*-aminophényl)benzimidazole; et de dichlorure de téréphtaloyle dans de l'acide sulfurique pour former une solution de filage, où le copolymère est neutralisé avant la formation de ladite solution de filage; ledit copolymère présentant une viscosité inhérente d'au moins 3 dl/g et présentant moins de 0,4 mole/kg d'acide pouvant être titré.

11. Procédé selon la revendication 10, dans lequel le rapport des moles du 5(6)-amino-2-(p-aminophényl)benzimidazole aux moles de la *para*-phénylènediamine est de 30/70 à 85/15, préférablement

dans lequel le rapport est de 45/55 à 85/15.

12. Procédé selon les revendications 10 à 11, dans lequel ledit acide sulfurique est au moins de 96 %, préférablement

dans lequel ledit acide sulfurique est au moins de 98 %, plus préférablement

dans lequel ledit acide sulfurique est au moins de 100 %.

13. Procédé selon l'une quelconque des revendications 10 à 12, comprenant en outre le filage de ladite solution de filage à travers une filière pour former un ou plusieurs filaments, et/ou

dans lequel ledit copolymère présente une viscosité inhérente d'au moins environ 5 dl/g à 25°C.

14. Procédé selon la revendication 13, comprenant en outre la combinaison d'une pluralité de filaments pour former un fil.

15. Fil fabriqué à l'aide du procédé selon l'une quelconque des revendications 10 à 14.

FIG. 1

## REFERENCES CITED IN THE DESCRIPTION

**Patent documents cited in the description**

- RU 2045586
- WO 2005054337 A1
- US 20100029159 A1
- US 2005054337 W
- US 20100029159 A
- US 3227793 A
- US 3414645 A
- US 3767756 A
- US 5667743 A